# EUROPEAN PATENT SPECIFICATION

(11) **EP 2 120 186 B1**
(45) Date of publication and mention of the grant of the patent: **18.05.2011**
(21) Application number: 08704292.5
(22) Date of filing: 31.01.2008
(51) Int. Cl.: G06K 19/04, G06K 19/077, B31B 1/06, B31B 1/98

(54) **IC TAG**
IC-TAG
MARQUEUR CI

(30) Priority: 31.01.2007 JP 2007021946
(43) Date of publication of application: 18.11.2009
(73) Proprietor: Mitsubishi Heavy Industries Printing & Packaging Machinery, Ltd., Mihara-shi Hiroshima 729-0393 (JP)
(72) Inventor: KATO, Toshihide, Mihara-shi Hiroshima 729-0393 (JP); KIMURA, Masakazu, Tokyo 143-0015 (JP); SATO, Hiroshi, Tokyo 144-0033 (JP)
(74) Representative: HOFFMANN EITLE
(86) International application number: PCT/JP2008/051545
(87) International publication number: WO 2008/093790

(56) References cited:
- EP-A- 1 246 152
- JP-A- 2000 137 778
- JP-A- 2002 355 847
- JP-A- 2006 121 059

## Description

### TECHNICAL FIELD

The present invention relates to integrated circuit (IC) tags suitable for use in placing on sheet products such as corrugated boards and corrugated board container blanks handled in batch units after production, and managing the sheet products.

### BACKBROUND ART

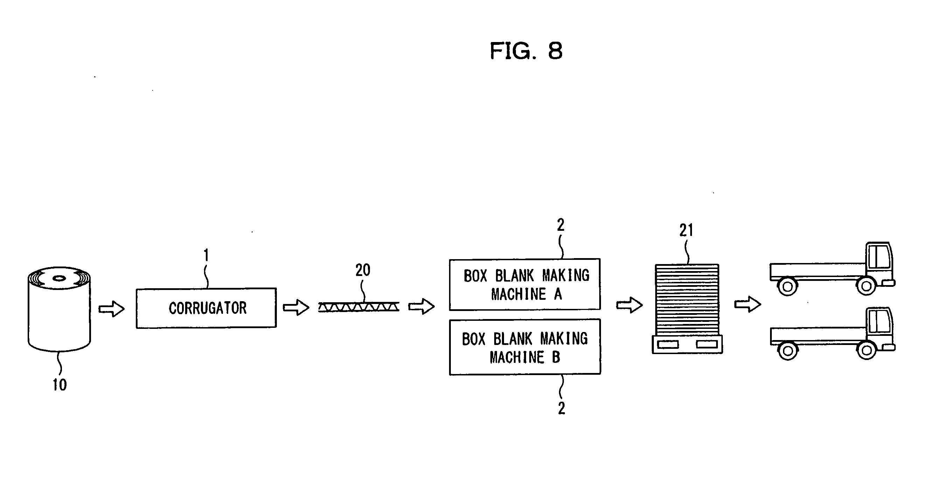

In the case of sheet products including paper products such as corrugated boards and corrugated board container blanks (corrugated board container material at the previous state of assembly)manufactured from the corrugated boards, a predetermined number of stacked sheets are conveyed or shipped in batch units.
For example, FIG. 8 schematically illustrates the flow in which corrugated board container blanks are manufactured from paper roll. As illustrated in FIG. 8, in the case of manufacturing corrugated board container blanks, a number of paper rolls 10 to order are fed to a corrugator 1, in which corrugated boards 20 to order are manufactured using these paper rolls 10. Downstream of the corrugator 1, there are provided usually several box blank making machines 2, in which the corrugated boards 20 are scored, cut, and glued tomanufacture flat corrugated board container blanks 21 before being set up. The manufactured corrugated board container blanks 21 are stacked in predetermined batch units, loaded in transportation means such as a truck etc., and shipped.

In such a box blank manufacturing process, in conveying to the box blank making machine 2 the corrugated boards 20 manufactured with the corrugator 1, or in shipping the corrugated board container blanks 21 manufactured with the box blank making machine 2, the corrugated boards 20 or the corrugated board container blanks 21 are conveyed or shipped in units of a batch consisting of a predetermined number of stacked sheets. When conveying or shipping, it is necessary to specify and manage each batch of the corrugated boards 20 or the corrugated board container blanks 21.

As a general method for managing such a batch of products, it is possible to put a unique number or symbol on each product batch and register in a computer the attribute (type etc.) of a product batch according to this number, but in this case, it is fairly difficult to display a unique number etc. on each product batch so that it is clearly visible from outside. Furthermore, this method has to rely on visual inspection.

In contrast to this, patent document 1 discloses a technique pertaining to an identification tag attached to a pallet for carrying loads with a forklift, hand lift or the like for pallet identification. Note that an ID tag employing an integrated circuit chip is referred to as an IC tag.
Patent Document 1: Japanese patent laid-open publication No. 2003-95270
EP 1246 152 discloses a working assembly including a transponder and a plate making body. The body includes a mounting for mounting the body to wood. The preamble of claim 1 is based on this document.

### SUMMARY OF THE INVENTION

### PROBLEMS TO BE SOLVED BY THE INVENTION

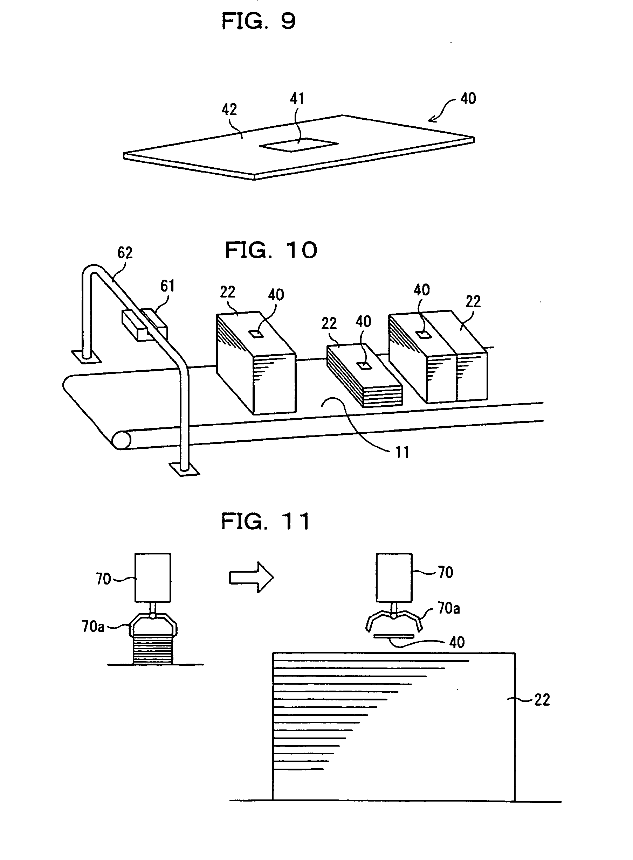

As in patent document 1, if an ID tag is installed on a pallet placing a product batch thereon, the product batch on the pallet can be specified, but since this case is based on the assumption that a pallet is used in conveying or shipping a product batch, the product batch cannot be applied if no pallet is employed.
Hence, for instance, a card or sheet IC tag 40 such as that shown in FIG. 9, as shown in FIG. 10, is placed on a product batch 22 conveyed on a product line (e.g., on a conveyor 11 in this example), and with a reader 61 provided on the product line, information is read out from each IC tag 40 using radio waves. This makes it possible tomanage the product batch 22 automatically by just placing the IC tag 40 on the product batch 22.

Note that the IC tag 40 consists of an IC tag main body 41 embedding an IC chip and a radio antenna therein, and a card or sheet plate 42 made from resin or paper on which the IC tag main body 41 is stuck. The reader 61 is installed face down on a gate-shaped support frame 62 so that the direction of detection faces the IC tag 40 on the conveyor 11.
Thus, because the IC tag 40 is only placed on the product batch 22, for example, with a gripping arm 70 with a gripper 70a at its lower end such as the one shown in FIG. 11, the IC tag 40 can be disposed on the product batch 22 automatically.

However, if the IC tag 40 is formed into a simple flat shape, as shown in FIG. 11, when placing the IC tag 40 onto the product batch 22 automatically, or when automatically collecting the IC tag 40 from the product batch 22, it is difficult to pick up the IC tag 40 one by one with the gripper 70a etc.
In addition, taking reading of the IC tag 40 by the reader 61 into consideration, the IC tag 40 is disposed on the product batch 22 so that the IC tag main body 41 is exposed to the upper surface of the plate 42, so if the IC tag 40 is formed into a simple flat shape, the IC tag main body 41 will be exposed to the top of the product batch 22, and for example, when a product such as a corrugated board or a corrugated board container blank drops down to the product batch 22, there is a possibility that the IC tag main body 41 will be separated from the plate 42, or the IC tag main body 41 itself will be damaged.

The present invention has been made in view of the circumstances described above. Accordingly, it is an object of the present invention to provide an IC tag which is capable of being reliably picked up one by one and of preventing frombeing damaged when placed on a product batch.

### MEANS FOR SOLVING THE PROBLEMS

To achieve the aforementioned object and in accordance with the present invention there is provided an integrated circuit (IC) tag according to claim 1. The tag is suitable for being tag placed on sheet products handled in batch units after production, and is suitable for being used to manage the sheet products. The IC tag includes an IC tag main body having an IC chip and a radio antenna embedded therein, and a plate with a flat portion in which the IC tag main body is installed. The plate has at its one end a protrusion extending from the flat portion.

Preferably, the IC tag main body is embedded in the plate or stuck on one surface of the plate. The sticking may be accomplished by an adhesive, or tape such as double-coated tape etc.
The protrusion is formed by bending the plate.

It is also preferable that the protrusion be formed in each of the opposite ends of the plate.

### ADVANTAGES OF THE INVENTION

According to the IC tag of the present invention, the plate of the IC tag has at its one ends the protrusions extending from the flat portion, so if the IC tag is held through the protrusions when placing it onto a batch of sheet products handled in batch units or when collecting it from the product batch, the IC tag can be easily picked up. In addition, even when a sheet product etc. drop down to the IC tag on a batch of sheet products, the sheet product collides with the protrusion, and the direct collision with the IC tag main body installed on the flat portion of the IC tag is avoided. Consequently, the joined portion between the plate and the IC tag main body, and the IC tag main body itself, are protected.

If the IC tag main body is embedded in the plate, damage to the IC tag main body can be prevented. If the IC tag main body is stuck on one surface of the plate, the IC tag main body can be easily installed on an elastic plate.
As the protrusion is formed by bending the plate, it is flat in shape and can be easily held. Depending on the degree that the protrusion is bent, stacked IC tags can be easily picked up one by one.

If the protrusions are formed at the opposite ends of the plate, when picking up the IC tag, either or both of the protrusions can be used and therefore operability is enhanced. In addition, even if a sheet product drops down to the IC tag, the joined portion between the plate and the IC tag main body, and the IC tag main body itself can be protected by both protrusions.

### BRIEF DESCRIPTION OF THE DRAWINGS

FIG. 1(a) is a side view showing an IC tag according to an embodiment of the present invention;
FIG. 1(b) is a plan view of the IC tag shown in FIG. 1(a);
FIG. 1 (c) is a perspective view of the IC tag shown in FIG. 1(a);
FIG. 2 (a) is a front view showing an IC tag holding tool according to the embodiment of the present invention;
FIG. 2 (b) is a plan view of the IC tag holding tool shown in FIG. 2(a);
FIG. 3(a) is a front view used to explain the installing position and operation of the IC tag holding tool according to the embodiment of the present invention;
FIG. 3(b) is a plan view used to explain the installing position and operation of the IC tag holding tool shown in FIG. 3(a);
FIG. 4 (a) is a front view used to explain the state in which the IC tag is used according to the embodiment of the present invention;
FIG. 4 (b) is a plan view used to explain the state in which the IC tag is used shown in FIG. 4(a);
FIG. 5 is a schematic plan view of a box blank making factory equipped with a corrugator and a box blank making machine for explaining the state in which the IC tag according to the embodiment of the present invention is used;
FIG. 6 is a side view of a product batch for explaining advantages of the IC tag according to the embodiment of the present invention;
FIGS. 7(a) to 7(d) are side views showing modifications of the IC tag according to the embodiment of the present invention;
FIG. 8 is a schematic diagram showing the flow of paper roll used in the manufacture of paper products with the manufacture of corrugated board container blanks as an example;
FIG. 9 is a perspective view used to explain a conventional IC tag;
FIG. 10 is a perspective view used to explain the situation in which the conventional IC tag is used; and
FIG. 11 is a side view used to explain how the conventional IC tag is conveyed.

### DESCRIPTION OF REFERENCE NUMERALS

- 40: IC tag
- 41: IC tag main body
- 42: Plate
- 42a: Flat portion of the plate 42
- 42b: Protrusion
- 71: IC tag holding tool
- 72: Base member
- 72a: Holding pawl
- 73: Actuator (e.g., an air cylinder in this embodiment)
- 74: Moving member
- 74a: Holding pawl
- 75: Mover (air cylinder)

### BEST MODE FOR CARRYING OUT THE INVENTION

An embodiment of the present invention will be described hereinafter with reference to the drawings.

### [Construction of an Embodiment]

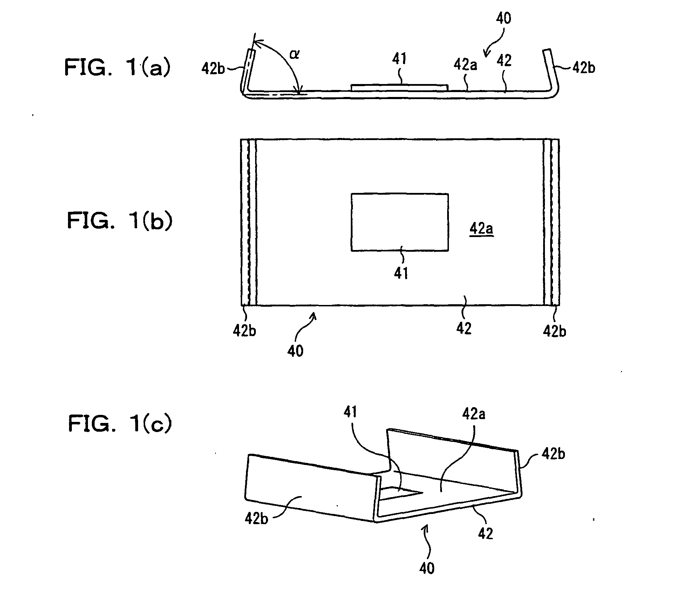

FIGS. 1 to 6 are used to explain an IC tag and an IC tag holding tool according to an embodiment of the present invention.
Referring initially to the IC tag according to this embodiment, as illustrated in FIGS. 1(a) to 1(c), the IC tag 40 is placed on sheet products handled in batch units after production (hereinafter referred to as a product batch) and used to manage this product batch. The IC tag 40 includes an IC tag main body 41 and a plate 42 equipped with the IC tag main body 41. Note that a sheet product in this embodiment is a corrugated board manufactured by a corrugator.

The IC tag main body 41 is plate shaped base body made of a vinyl sheet, etc., and includes an IC chip and a radio antenna, which are embedded in the IC tag main body 41.
The plate 42 has a flat portion 42a formed into a rectangular or strip shape with plastic resin, and onto one surface (upper surface as the plate 42 is placed on a product batch) of the flat portion 42a, the IC tag main body 41 is glued. Note that for gluing the IC tag main body 41 onto the flat portion 42a of the plate 42, adhesive tape such as double-coated tape etc. may be employed. The IC tag main body 41 may be embedded in the flat portion 42a of the plate 42. In such a case, the IC chip and radio antenna of the IC tag main body 41 may be embedded directly in the flat portion 42a of the plate 42. In the construction, the plate portion of the IC tag main body 41 is constructed of the plate 42 itself.

If the IC tag main body 41 is embedded in the plate 42, damage to the IC tag main body 41 can be prevented. In addition, if the IC tag main body 41 is glued onto a surface facing in the direction of the paper tube center of the plate 42 as it is installed on the inner periphery of the paper tube, the IC tag main body 41 can be easily installed on the plate 42.
The flat portion 42a of the plate 42 has at its longitudinal ends (i.e. facing short side of a rectangular or strip shape) protrusions 42b, which extend in the direction where the IC tag main body 41 is installed. The protrusion 42b of this embodiment is formed by bending each end of the plate 42 to the one side of the flat portion 42a on which the IC tag main body 41 is glued. In this embodiment, the protrusion 42b is bent at an angle α slightly more acute than a right angle relative to the side of the flat portion 42a.

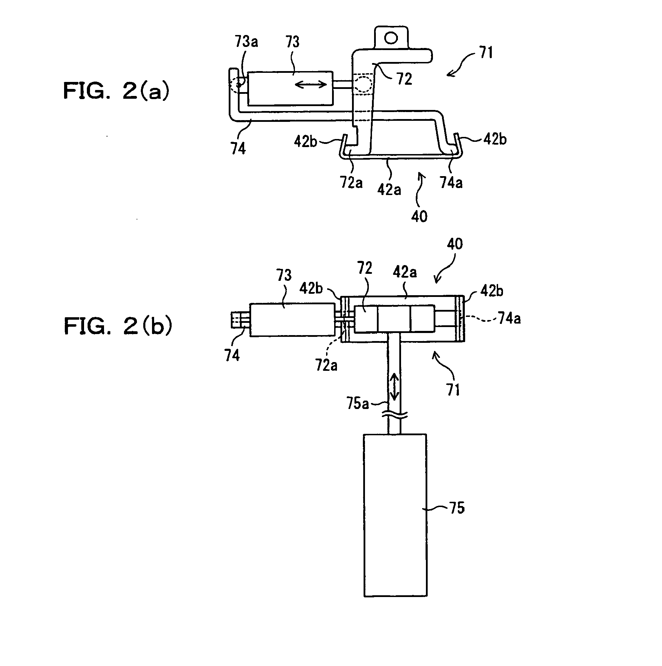

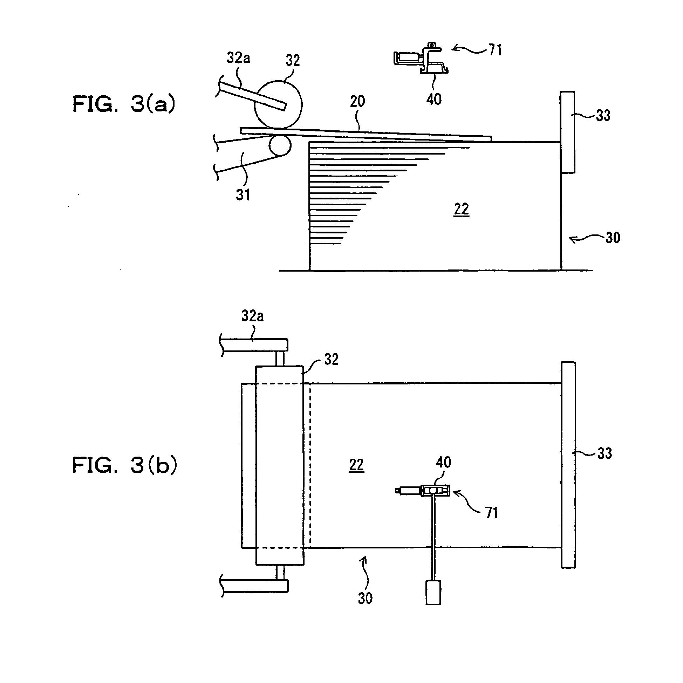

The reason the angle α of the protrusion 42b to the flat portion 42a is acute is that in holding the IC tag 40, as shown in FIGS. 3(a) and 3(b), the IC tag 40 is held through the inner sides of the protrusions 42b by the IC tag holding tool 71.
The IC tag holding tool according to the present embodiment is described below. As illustrated in FIGS. 2 (a) , 2(b), 3(a), and 3(b), the IC tag holding tool 71 is equipped with a base member 72 with a holding pawl 72a; a moving member 74 with a holding pawl 74a, movably supported in a predetermined direction through a guide member not shown on the base member 72; and an actuator (e.g., an air cylinder in this embodiment) 73 interposed between the base member 72 and the moving member 74 to drive the moving member 74 in the predetermined direction. Note that the predetermined direction means the direction in which the holding pawls 72a and 74a are moved toward or away from each other.

The IC tag holing tool 71 is also movable by a mover (e.g., an air cylinder connected through a piston rod 75a) 75. Therefore, by movements of the holding pawls 72a, 74a and the IC tag holing tool 71, the IC tag 40 can be conveyed over and placed onto the product batch 22.
More specifically, by moving the holding pawls 72a and 74a toward each other so that the distance therebetween is shorter than the inner sides of both protrusions 42b of the IC tag 40, then disposing them between the inner sides of both protrusions 42b, and moving the holding pawls 72a and 74a away from each other, as shown in FIGS. 2 (a) and 2(b), the IC tag 40 can be held. With the IC tag 40 held, by moving the IC tag holding tool 71, as shown in FIG. 3, the IC tag 40 is moved over the product batch 22. Then, by moving the holding pawls 72a and 74a toward each other, they are separated from the inner sides of both protrusions 42b of the IC tag 40, and the IC tag 40 falls off the IC tag holding tool 71 and is placed onto the product batch 22.

### [Operation and Advantages of the Embodiment]

Because the IC tag and the IC tag holding tool according to this embodiment are constructed as described above, with the IC tag 40 placed on the product batch 22, the product batch 22 can be managed as described later.

That is, for example, as shown in FIGS. 3(a) and 3(b), the fall of the IC tag 40 onto the product batch 22 by the inward movement of the holding pawls 72a and 74a is performed over a stacker 30 from which the corrugated board 20 is discharged through a conveying unit (a conveyor 31 and a discharge roller 32 pivotally supported by support arms 32a) from the corrugator (not shown in FIGS. 3(a) and 3(b)), for example, at the timing where the last corrugated board 20 constituting a batch abuts the back stop 33 of the stacker 30.

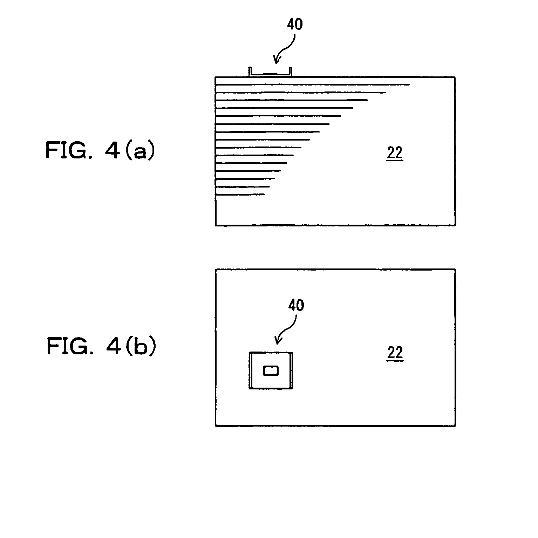

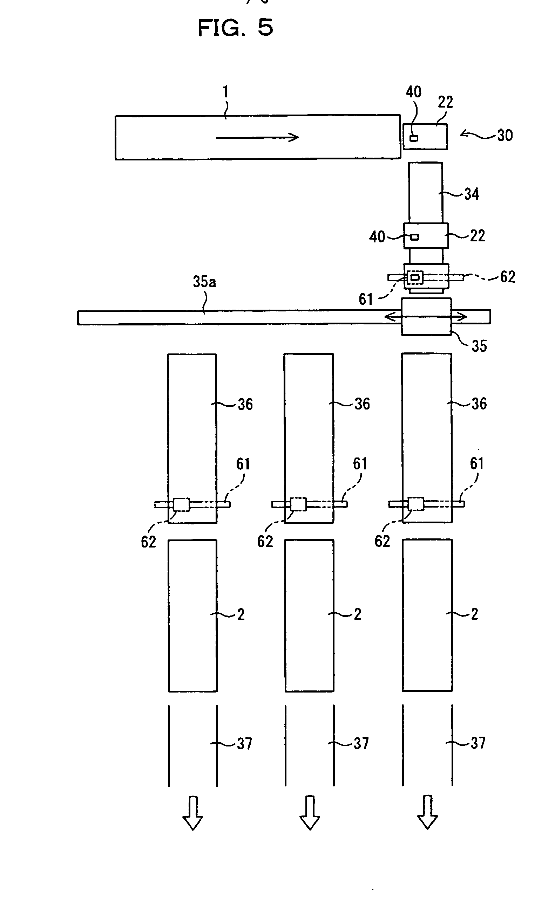

As a result of the fall of the IC tag 40, as shown in FIGS. 4(a) and 4(b), the IC tag 40 is placed on the product batch 22. Note that the stacker 30, as shown in FIG. 5, is provided near the downstream end of the corrugator 1. The product batch 22 formed by the stacker 30 is placed on the conveyor 34 and transferred to a product batch receiving position of an automatic guided vehicle (AGV) 35. Thereafter, by the AGV 35, one of the box blank making machines 2 to be processed is selected and the corresponding product batch 22 is fed to the selected box blank making machine.

Over the conveyor 34 which is upstream part of the product batch receiving position an AGV 35 (e.g., over the downstream end of the conveyor 34 in this embodiment), a reader 61 to read out information from the IC tag 40 is installed face down on a gate-shaped support frame 62 so that its direction of detection faces the IC tag 40 on the conveyor 11 [sic]. The AGV 35 selects a box blank making machine to be processed according to the information of the product batch 22 read by the reader 61, and conveys the product batch 22 traveling on a sending-out root 35a to the selected box blank making machine.

Each of the box blank making machines 2 is equipped with a sending-in conveyor 36. In the sending-in conveyor 36, a reader 61 to read out information from the IC tag 40 is installed face down on a gate-shaped support frame 62 so that its direction of detection faces the IC tag 40 on the conveyor 11 [sic]. Each of the box blank making machines 2 manufactures corrugated board container blanks in the processing contents according to the information of the product batch 22 read by the reader 61. The manufactured corrugated board container blanks are sent out from the sending-out conveyor 37 as a product batch, and shipped by transportation means such as a truck etc.

At the upstream end of each box blank making machine 2, for example, by an operator, the IC tag 40 on the product batch 22 is collected and put into a collecting box. If the IC tag is put into the collecting box, it can be confirmed with a detector within the collecting box whether a batch of sheets being conveyed has been manufactured according to the production plan. This confirmation makes it possible to perform the setting of the box blank making machine correctly.
Thus, according to the IC tag [sic] of the present invention, the plate 42 has at the longitudinal ends the protrusions 42b extending from the flat portion 42a, so if it is held through the protrusions 42b by the IC tag holding tool 71 or manually, the IC tag 40 can be easily and reliably picked up.

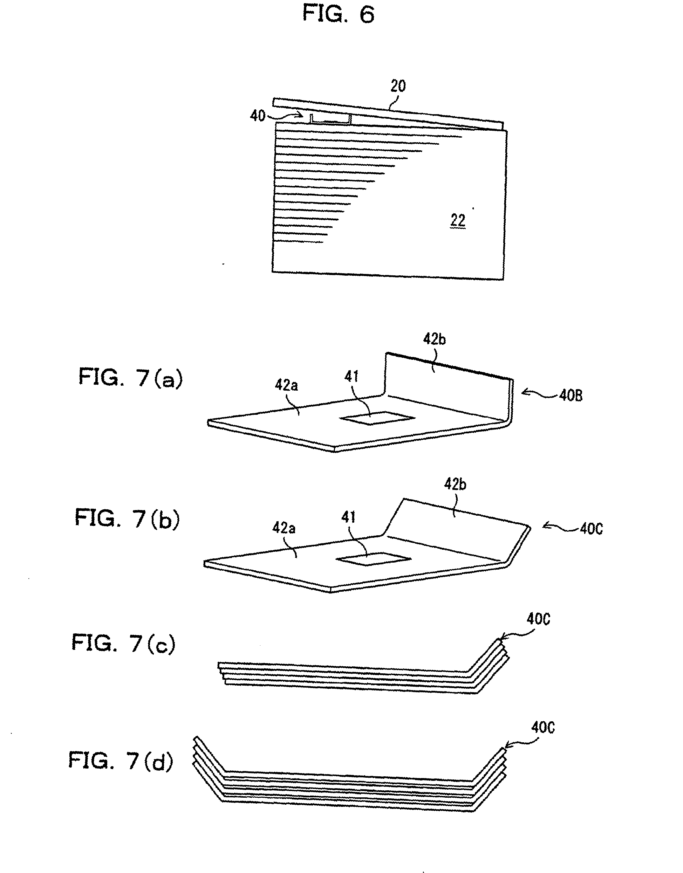

Therefore, when placing the IC tag 40 onto the product batch 22, and when collecting the IC tag 40 placed on the product batch 22, the operations can be readily performed, and the use of the IC tag holding tool 71 can make automation of these operations easy.
In addition, as shown in FIG. 6, even when a sheet product such as a corrugated board etc. drops down to the IC tag on the product batch 22, the sheet product collides with the protrusion 42b and the direct collision with the IC tag main body 41 installed on the flat portion 42a of the IC tag 40 is avoided, so that the joined portion between the plate 42 and the IC tag main body 41, and the IC tag main body 41 itself can be protected.

Particularly, the protrusions 42b in this embodiment are formed at the opposite longitudinal ends of the plate 42, so when picking up the IC tag 40, either or both of the protrusions [sic] can be used and therefore operability is enhanced. In addition, even if a sheet product drops down to the IC tag, the joined portion between the plate 42 and the IC tag main body 41, and the IC tag main body 41 itself can be more reliably protected by both protrusions 42b.

Because the protrusions [sic] are formed by bending the opposite ends of the plate [sic], they are flat in shape and can be easily held by mechanical holding means or operator's hand.

### [Others]

While the present invention has been described with reference to the preferred embodiment thereof, the invention is not to be limited to the details given herein, but may be modified within the scope of the invention as defined by the appended claims.
For example, although it has been described that the IC tag and the IC tag holding tool according to this embodiment are used in the conveyance of a batch of corrugated boards as an example of sheet products, the IC tag may be placed on a product batch of corrugated board container blanks manufactured and used to manage the shipment of them. The IC tag and the IC tag holding tool may be used to manage not only corrugated boards and corrugated board container blanks but also a product batch of other sheet products.

In the above embodiment, although the protrusions 42b are provided at the opposite longitudinal ends of the flat portion 42a, like IC tags 40B and 40C shown in FIGS. 7(a) and 7(b), even if a single protrusion 42b is formed in one of the opposite longitudinal ends of a flat portion 42a, nearly the same advantages as the above embodiment can be obtained. In addition, for instance, the other end having no protrusion of the IC tag can be used inserted between sheet products of a product batch, so this case can be used for various purposes.

The protrusion is formed by bending the plate. According to an embodiment of the present invention the angle α of the protrusion 42b to the flat portion 42a is not limited to the acute angle of the above embodiment, but may be a right angle. In addition, if the protrusion is formed at an obtuse angle, as shown in FIGS. 7(c) and 7(d), IC tags 40C can be stacked.

Finally, in the above embodiment, although the plate 42 is rectangular in shape at planer view, it is not to be limited to the rectangular shape.

## Claims

1. An integrated circuit (IC) tag (40) suitable for use in placing on sheet products (22) handled in batch units after production, and suitable for use in managing said sheet products, comprising:
an IC tag main body (41) having an IC chip and a radio antenna embedded therein; and
a plate (42) with a flat portion (42a) in which said IC tag main body is installed;
wherein said plate has at its one end a protrusion (42b) extending from said flat portion; **characterised in that**:
said protrusion is formed by bending said plate.

2. The IC tag as set forth in claim 1, wherein said IC tag main body is embedded in said plate.

3. The IC tag as set forth in claim 1, wherein said IC tag main body is stuck or glued on one surface of said plate.

4. The IC tag as set forth in any one of claims 1 to 3, wherein said protrusion is formed in each of opposite ends of said plate.

5. The IC tag as set forth in claim 4, wherein said protrusions are formed by bending said plate

6. The IC tag as set forth in claim 5 as dependent on claim 3, wherein the protrusions are formed by bending opposing ends of the plate to the one side of the flat portion on which the IC tag main body is glued.

7. The IC tag as set forth in claim 4, 5 or 6, wherein the protrusions are bent at an angle (α) more acute than a right angle relative to the side of the flat portion so that the IC tag is holdable through inner sides of the protrusions by an IC tag holding tool (71).

8. The IC tag as set forth in claim 1, wherein an angle (α) of the protrusion to the flat portion is an acute angle, a right angle or an obtuse angle.

## Patentansprüche

1. Integrierter Schaltungs- (IC) Anhänger (40), der zur Verwendung beim Anbringen auf Dünnschichtprodukten (22) geeignet ist, die in Beschickungseinheiten nach einer Herstellung befördert werden, und der zur Verwendung beim Verwalten der Dünnschichtprodukte geeignet ist, aufweisend:
einen IC-Anhängerhauptkörper (41) mit einem IC-Chip und einer darin eingebetteten Funkantenne, und
eine Platte (42) mit einem flachen Abschnitt (42a), in dem der IC-Anhängerhauptkörper installiert ist,
bei dem die Platte an ihrem einen Ende einen Vorsprung (42b) aufweist, der sich vom flachen Abschnitt erstreckt, **dadurch gekennzeichnet, dass**:
der Vorsprung durch Biegen der Platte ausgebildet ist.

2. IC-Anhänger gemäß Anspruch 1, bei dem der IC-Anhängerhauptkörper in die Platte eingebettet ist.

3. IC-Anhänger gemäß Anspruch 1, bei dem der IC-Anhängerhauptkörper an eine Fläche der Platte angeheftet oder angeklebt ist.

4. IC-Anhänger gemäß einem der Ansprüche 1 bis 3, bei dem der Vorsprung in jeder der gegenüberliegenden Enden der Platte ausgebildet ist.

5. IC-Anhänger gemäß Anspruch 4, bei dem die Vorsprünge durch Biegen der Platte ausgebildet sind.

6. IC-Anhänger gemäß Anspruch 5, wenn abhängig von Anspruch 3, bei dem die Vorsprünge durch Biegen von gegenüberliegenden Enden der Platte zur einen Seite des flachen Abschnitts ausgebildet sind, an dem der IC-Anhängerhauptkörper angeklebt ist.

7. IC-Anhänger gemäß Anspruch 4, 5 oder 6, bei dem die Vorsprünge in einem Winkel (α), der spitzer ist als ein rechter Winkel, relativ zur Seite des flachen Abschnitts derart gebogen sind, dass der IC-Anhänger durch Innenseiten der Vorsprünge durch ein IC-Anhängerhaltewerkzeug (71) haltbar sind.

8. IC-Anhänger gemäß Anspruch 1, bei dem ein Winkel (α) des Vorsprungs zum flachen Abschnitt ein spitzer Winkel, ein rechter Winkel oder ein stumpfer Winkel ist.

## Revendications

1. Étiquette (40) de circuit intégré (CI) appropriée pour une utilisation dans le placement sur des produits en feuille (22) traités en unités par lots après production, et appropriée pour une utilisation dans la gestion desdits produits en feuille, comprenant :
un corps principal (41) d'étiquette de CI ayant une puce de CI et une antenne radio incorporée en son sein ; et
une plaque (42) avec une partie plate (42a) dans laquelle ledit corps principal d'étiquette de CI est installé ;
dans laquelle ladite plaque a au niveau de son extrémité particulière une protubérance (42b) s'étendant à partir de ladite partie plate ; **caractérisée en ce que** :
ladite protubérance est formée en pliant ladite plaque.

2. Étiquette de CI selon la revendication 1, dans laquelle ledit corps principal d'étiquette de CI est incorporé dans ladite plaque.

3. Étiquette de CI selon la revendication 1, dans laquelle ledit corps principal d'étiquette de CI est collé ou encollé sur une surface de ladite plaque.

4. Étiquette de CI selon l'une quelconque des revendications 1 à 3, dans laquelle ladite protubérance est formée dans chacune des extrémités opposées de ladite plaque.

5. Étiquette de CI selon la revendication 4, dans laquelle lesdites protubérances sont formées en pliant ladite plaque.

6. Étiquette de CI selon la revendication 5 telle que dépendante de la revendication 3, dans laquelle les protubérances sont formées en pliant des extrémités opposées de la plaque vers le côté de la partie plate sur laquelle le corps principal d'étiquette de CI est collé.

7. Étiquette de CI selon la revendication 4, 5 ou 6, dans laquelle les protubérances sont pliées à un angle (α) plus aigu qu'un angle droit par rapport au côté de la partie plate de sorte que l'étiquette de CI peut être maintenue par l'intermédiaire de côtés intérieurs des protubérances par un outil de maintien d'étiquette de CI (71).

8. Étiquette de CI selon la revendication 1, dans laquelle un angle (α) de la protubérance par rapport à la partie plate est un angle aigu, un angle droit ou un angle obtus.
